**Europäisches Patentamt**

**European Patent Office**

**Office européen des brevets**

(19)

(11) Veröffentlichungsnummer: **0 117 410**
**B1**

(12)

# EUROPÄISCHE PATENTSCHRIFT

(45) Veröffentlichungstag der Patentschrift:
03.09.86

(51) Int. Cl.⁴: **C 08 F 6/00**

(21) Anmeldenummer: **84100483.1**

(22) Anmeldetag **18.01.84**

(54) Verfahren zur Erhöhung der Wirksamkeit von hochmolekularen vernetzten Polycarbonsäuren.

(30) Priorität: **26.01.83 DE 3302496**

(43) Veröffentlichungstag der Anmeldung:
**05.09.84 Patentblatt 84/36**

(45) Bekanntmachung des Hinweises auf die Patenterteilung:
**03.09.86 Patentblatt 86/36**

(84) Benannte Vertragsstaaten:
**DE FR GB IT**

(56) Entgegenhaltungen:
**Keine Entgegenhaltungen.**

(73) Patentinhaber: **BASF Aktiengesellschaft, Carl-Bosch- Strasse 38, D-6700 Ludwigshafen (DE)**

(72) Erfinder: **Denzinger, Walter, Wormser Landstrasse 65, D-6720 Speyer (DE)**
Erfinder: **Hartmann, Heinrich, Dr., Weinheimer Strasse 46, D-6703 Limburgerhof (DE)**
Erfinder: **Faulhaber, Gerhard, Dr., Seebacher Strasse 47, D-6702 Bad Duerkheim (DE)**
Erfinder: **Raubenheimer, Hans- Juergen, Benzstrasse 6, D-6834 Ketsch (DE)**

**Beschreibung**

Vernetzte Polycarbonsäuren finden als in Wasser quellbare synthetische Verdickungsmittel vielerlei Anwendung in der Textil-, Pharma-, Kosmetik-, Papier-, Klebstoff-, Farben- und Mineralölindustrie. Es handelt sich bei diesen Produkten meist um Copolymere der Acrylsäure oder Methacrylsäure. Die Copolymerisate werden durch Polymerisation einer polymerisierbaren ethylenisch ungesättigten Carbonsäure in Gegenwart von mehrfach monoethylenisch ungesättigten Verbindungen als Vernetzer hergestellt.

Es sind zahlreiche Vernetzer bekannt, z.B. Methylenbisacrylamid (DE-B 11 03 585), Butandioldiacrylat, Divinylbenzol, Divinylsulfon, Maleinsäurediallylester (DE-B 11 38 225), Polyallylsucrosen (US-A 27 98 053), Divinyldioxan (DE-B 20 17 451), Allylgruppen enthaltende Acrylsäureester (DE-B-22 14 945), Triallylcyanurat (DE-B 25 34 792), Polyallylether, Trimethylacryloyltriazin (US-A 29 85 625), Tetravinyl- oder Tetrallylsilan und entsprechende Zinn- oder Germaniumverbindungen (US-A 29 85 631), Hexaallyl- und Hexamethylallyltrimethylensulfon (US-A 29 85 625 und 29 58 679), Triallylamin und Tetraallylethylendiamin (US-A 30 32 538), Allylester der Phosphorsäure bzw. phosphorigen Säure (DE-B 15 95 727) und Allylphosphoranidoverbindungen (DE-B 28 22 423). Alle Polycarbonsäuren, die diese Vernetzer einpolymerisiert enthalten, liefern in vollentsalztem Wasser in Konzentrationen von 0,1 bis 1 Gew.-% nach der Neutralisation leicht viskose bis steife Gele, die je nach Verwendung der Art des eingesetzten Vernetzers mehr oder weniger hydrolysestabil sind. Ein Nachteil dieser vernetzten Polycarbonsäuren liegt jedoch darin, daß sie in elektrolythaltigem Wasser, wie beispielsweise Trinkwasser, eine deutlich verringerte Verdickerwirkung aufweisen, besonders in den Fällen, in denen niedrige Konzentrationen des Verdickungsmittels verwendet werden.

Der Erfindung liegt die Aufgabe zugrunde, die Wirksamkeit von hochmolekularen vernetzten Polycarbonsäuren, die als Verdickungsmittel für neutrale und alkalische wäßrige Systheme verwendet werden, zu erhöhen.

Gegenstand der Erfindung ist ein Verfahren zur Erhöhung der Wirksamkeit von hochmolekularen vernetzten Polycarbonsäuren, die als Verdickungsmittel für neutrale und alkalisch wäßrige Systeme verwendet und durch Fällungs- oder Suspensionspolymerisation von Mischungen aus

(a) 70 bis 99,9 Gew.-% monoethylenisch ungesättigten Carbonsäuren,

(b) 0,1 bis 10 Gew.-% 2- oder mehrfach ethylenisch ungesättigten Monomeren und

(c) 0 bis 20 Gew.-% anderen monoethylenisch ungesättigten Monomeren bei Temperaturen bis 75° C hergestellt werden, bei dem die Copolymerisate mach der Polymerisation 2 Minuten bis 5 Stunden auf eine Temperatur in dem Bereich von 80 bis 130° C erhitzt werden.

Als Komponente (a) der Monomerenmischungen, die der Polymerisation unterworfen werden, kommen vor allem monoethylenisch ungesättigte Carbonsäuren mit 3 bis 5 Kohlenstoffatomen in Betracht. Sie können eine oder 2 Carboxylgruppen enthalten. Beispielsweise eignen sich Acrylsäure, Methacrylsäure, Crotonsäure, Itaconsäure, Mesaconsäure, Maleinsäure, Fumarsäure und Zitraconsäure und Mischungen untereinander. Für die Herstellung besonders wirksamer Verdickungsmittel setzt man vorzugsweise Acrylsäure oder Methacrylsäure bei der Polymerisation ein. Die Monomerenmischungen enthalten 70 bis 99,9, vorzugsweise 76 bis 99,7 Gew.-% einer monoethylenisch ungesättigten Carbonsäure.

Als Komponente (b) der Monomerenmischung eignen sich die hierfür bekannten 2- und mehrfach ethylenisch ungesättigten Monomeren, z.B. Divinylbenzol, Divinylketon, 1,4-Butadien, Ethylenglykoldiacrylat, Methylenbisacrylamid, Diallylphthalat, Divinylether, Divinyldioxan, Polyalkenylpolyether wie Polyallyl- und Polyvinylether von Oligosacchariden wie Pentaallylsucrose und Pentaerythrittriallylether, Diallylacrylamid, Polyallyl- und Polyvinylsilane, Triallylcyanurat, Allylester der Phosphorsäure und phosphorigen Säure sowie Allylphosphoramidoverbindungen wie Phosphorsäuremonoethylester-N,N-(diallyl)diamid sowie Mischungen dieser Monomeren. Da die vernetzten Polycarbonsäuren bei der Verwendung als Verdickungsmittel stark hydrolysierenden Bedingungen ausgesetzt sind, bevorzugt man für die Herstellung hydrolysestabiler Polymeren solche Vernetzer, die unter stark sauren und stark basischen Bedingungen nicht zur Spaltung neigen. Hierzu gehören beispielsweise Divinylbenzol, Divinyldioxan, Tetravinylsilan, Tetraallylsilan und Pentaerythrittriallylether. Die Monomeren der Gruppe (b) werden in einer Menge von 0,1 bis 10, vorzugsweise 0,3 bis 4 Gew.-% bei der Polymerisation eingesetzt.

Als Monomer (c) kann man alle anderen monoethylenisch ungesättigten Monomeren verwenden, die mit den Monomeren (a) und (b) copolymerisierbar sind und die zu Copolymerisaten führen, die in Wasser quellbar sind. Geeignet sind beispielsweise Amide und Ester von ethylenisch ungesättigten Mono- und Dicarbonsäuren, z.B. Acrylamid, Methacrylamid, Acrylsäure- und Methacrylsäureester von einwertigen Alkoholen mit 1 bis 8 Kohlenstoffatomen, Acrylnitril, Methacrylnitril, Mono- und Diester von Maleinsäure, Fumarsäure und Itaconsäure mit einwertigen Alkohole, mit 1 bis 4 Kohlenstoffatomen, Vinylacetat, Vinylpropionat, Vinylalkylether sowie Acrylamidomethylpropansulfosäure. Diese Gruppe von Monomeren wird gegebenenfalls zur Modifizierung der vernetzten Polycarbonsäuren verwendet und ist am Aufbau der Copolymerisate zu 0 bis 20 % beteiligt.

Die Herstellung dieser Polymeren erfolgt durch Fällungspolymerisation in einem organischen Lösungsmittel in dem die Monomeren löslich und die Copolymeren unlöslich sind. Das Lösungsmittel muß gegenüber den Monomeren und den Copolymerisaten inert sein. Es ist vorzugsweise ein aromatischer oder aliphatischer Kohlenwasserstoff oder Halogenkohlenwasserstoff, wobei jedoch auch jedes andere Lösungsmittel, das den oben angegebenen Erfordernissen entspricht, eingesetzt werden kann. Geeignete Lösungsmittel sind beispielsweise Benzol, Toluol, flüssige Paraffine, Methylenchlorid, Dichlorethan, Trichlorethan, Butylchlorid, Trifluorethan, Trichlortrifluorethan und Tetrachlordifluorethan. Die bevorzugten Lösungsmittel sind Benzol und 1,1,1-Trichlorethan.

Um ein Verklumpen der ausgefallenen Polymerisatteilchen zu verhindern, ist es oftmals von Vorteil, Schutzkolloide mitzuverwenden. Als Schutzkolloide sind Polymere geeignet, die möglichst hydrophil sind und sich in dem bei der Fällungspolymerisation eingesetzten Lösungsmittel einwandfrei lösen. Geeignet sind dafür beispielsweise Polyalkylvinylether, wie Polymethylvinylether, Homo- und Copolymerisate des Vinylpyrrolidons mit beispielsweise Vinylestern, wie Vinylacetat und/oder Vinylpropionat oder mit Acrylsäure- bzw. Methacrylsäureestern, wobei wasserfreie Homopolymerisate des Vinylpyrrolidons bevorzugt sind. Man setzt das Schutzkolloid in Mengen von 0,1 bis 10 %, vorzugsweise 0,3 bis 3 %, bezogen auf die Monomeren, zu. Die Momomerenkonzentration beträgt im allgemeinen, wenn ohne Schutzkolloid gearbeitet wird, 5 bis 20 Gew.-% und mit Schutzkolloid 20 bis 40 Gew.-% Um besonders hochmolekulare vernetzte Polycarbonsäuren herzustellen, wird die Polymerisation der Monomerenmischungen aus (a) und (b) sowie gegebenenfalls (c) bei Temperaturen von 30 bis 75, vorzugsweise bei 40 bis 70°C durchgeführt. Für die Polymerisation ist ein in organischen Lösungsmitteln löslicher radikalischer Initiator erforderlich. Geeignet sind beispielsweise Benzoylperoxid, Tertiärbutylethylhexanoat, Tertiärbutylperoktoat, Tertiärbutylperpivalat, Acetylcyclohexansulfonylperoxid, Dicyclohexylperoxidicarbonat, Di(tertiärbutylcyclohexyl)peroxidicarbonat sowie Azoverbindungen wie z.B. 2,2'-Azobis(isobutyronitril) oder 2,2'-Azobis (2,4-Dimethylvaleronitril) oder 2,2'-Azobis(4-methoxy-2,4-di-methylvaleronitril). Auch Mischungen von derartigen Initiatoren sind oftmals von Vorteil.

Um die Wirksamkeit von hochmolekularen vernetzten Polycarbonsäuren als Verdickungsmittel zu verbessern, werden die vernetzten Copolymerisate einer thermischen Behandlung unterworfen. Man kann die vernetzte, Copolymerisate in Form der bei der Polymerisation erhaltenen Suspension bei Temperaturen im Bereich von 80 bis 130°C behandeln. Sofern ein Suspensionsmittel bei der Polymerisation verwendet wurde, dessen Siedepunkt oberhalb von 80°C liegt, tempert man die Polymerisatsuspension in einem Autoklaven unter Druck. Während des Temperns wird die Suspension vorzugsweise gemischt. Es kann jedoch auch von Vorteil sein, das Copolymere zunächst als Feststoff zu isolieren und diesen dann zu tempern. Um einen Feststoff aus den Suspensionen zu erhalten, werden sie einem milden Trocknungsprozeß unterworfen, z.B. in einem Sprühtrockner, Wirbelbett- oder Vakuumschaufeltrockner. Dabei empfiehlt es sich, unter Ausschluß von Luft bzw. unter Stickstoff zu arbeiten, um eine oxidative Schädigung der Copolymerisate zu vermeiden. Die vernetzten Copolymerisate werden nicht nur in Form der Suspension oder eines Pulvers getempert, sondern können auch in einem anderen inerten Lösungsmittel als dem bei dem Herstellung verwendeten Suspensionsmittel, getempert werden. Diese Arbeitsweise empfiehlt sich besonders dann, wenn die Polymerisation in Chlorkohlenwasserstoffen oder Benzol durchgeführt wurde und diese Lösungsmittel möglichst weitgehend aus den Polymerisaten entfernt werden sollen. In diesen Fällen wird im Anschluß an den Trocknungsvorgang das restliche Lösungsmittel aus den vernetzten Copolymerisaten extrahiert, z.B. mit Hilfe eines aliphatischen Kohlenwasserstoffs. Die vernetzten Copolymerisate werden erfindungsgemäß auf eine Temperatur in dem Bereich von 80 bis 130, vorzugsweise 90 bis 120°C erhitzt. Die Behandlungstemperaturen liegen immer unterhalb der Glastemperatur der Polymerisate, damit die Polymerisate beim Tempern nicht miteinander verklumpen. Die Dauer der thermischen Behandlung der Polymerisate beträgt zwischen 2 Minuten und 5 Stunden, wobei bei 80°C die längeren Behandlungszeiten bei 130°C sehr kurze Behandlungszeiten in Betracht kommen. Werden die vernetzten Copolymerisate zu lange getempert, so erniedrigt sich deren Verdickerwirkung in wäßrigen Systemen und kann dabei praktisch auf 0 zurückgehen, weil das Polymere dann nicht mehr quellbar ist. Die Behandlungsbedingungen für die vernetzten Copolymerisate sind den Eigenschaften der Produkte anzupassen. Beispielsweise wird bei einem Produkt die optimale Verdicklungswirkung nach einer Behandlungszeit von 5 Stunden bei einer Temperatur von 80°C oder 30 Minuten bei 100°C oder 3 Minuten bei 125°C erreicht. Dauer und Temperaturbereich bei der thermischen Behandlung der vernetzten Copolymerisate bedürfen einer genauen Abstimmung, um Produkte mit optimaler Verdickungswirkung zu erzielen. Allgemein gilt, daß bei höherer Temperatur kürzere Behandlungszeiten eingehalten werden müssen.

Die erfindungsgemäß behandelten Copolymeren ergeben nach Neutralisation mit einer Base klare Gele, die je nach Konzentration fließfähig bis steif sind. Die Verdickung in Wasser wird erreicht durch Neutralisation der Carboxylgruppen, wobei die optimale Verdickung in einem pH-Wertbereich von 6,0 bis 10,0, vorzugsweise 7,0 bis 9,0 erreicht wird. Die zur Neutralisation verwendeten Basen sind im allgemeinen Natriumhydroxid, Kaliumhydroxid, Natrium- oder Kaliumcarbonat, Ammoniak oder Mischungen dieser Basen. Oftmals ist es von Vorteil, als Neutralisationsmittel Amine, wie Tri-$C_1$ bis $C_5$-Alkylamine oder Mono-, Di- oder Tri-$C_1$ bis $C_4$-Alkanolamine oder deren Mischungen untereinander einzusetzen.

Die erfindungsgemäß hergestellten Produkte ergeben bei technischen Anwendungskonzentrationen von 0,3 %, nach Neutralisation mit Ammoniak, Gele, deren Viskosität in vollentsalztem Wasser nur wenig höher wird, aber in elektrolythaltigem Wasser (künstlichem Trinkwasser) bis zu etwa 50 % höher liegt als die Viskosität von Produkten, die nach der Polymerisation nicht getempert wurden.

Die erfindunsgemäß hergestellten hochmolekularen vernetzten Copolymeren können z.B. als Verdickungsmittel in Textildruckpasten, kosmetischen und pharmazeutischen Zubereitungen, Dispersionsfarben, Klebstoffen und Erdölbohrspühlmittel Verwendung finden.

Die Prüfung der Verdickerwirkung der vernetzten Copolymeren erfolgte zur Erhaltung reproduzierbarer Werte in einem künstlichen Trinkwasser folgender Zusammensetzung:
10,00 g Calciumchloridlösung) eingestellt auf 1000°
5,00 g Magnesiumsulfatlösung) deutscher Härte
0,12 g Natriumbicarbonat
984,88 g destilliertes Wasser.

Die Bereitung des Verdickungsansatzes und die Messung der Viskosität des verdickten wäßrigen Systems wurde nach folgender Methode durchgeführt:

In einem 600 ml fassenden Becherglas wurden 497 g des oben beschriebenen künstlichen Trinkwassers vorgelegt. Unter Rühren mit einem Flügelrührer bei einer Drehzahl von ca. 100 Umdrehungen/min streute man dann 1,5 g eines pulverförmigen vernetzten Copolymerisates so ein, daß eine Verklumpung des Pulvers im Wasser vermieden wurde. Die Mischung wurde 10 Minuten gerührt, dann 10 Minuten stehen gelassen und anschließend mit 1,5 g wäßrigem Ammoniak (25 %ig) versetzt und anschließend homogenisiert. Der pH-Wert des Ansatzes soll 8 bis 9 betragen. Um praxisnahe Ergebnisse zu erhalten, wird eine Probe von 250 g des Ansatzes mit einem Schnellrührer (Propellerdurchmesser 3,5 cm) bei 8000 Umdrehungen/min 3 Minuten gerührt. Die Temperatur dieser Probe wird anschließend auf 20°C eingestellt. Nach dem Temperieren der Probe wird die Viskosität in einem Haake-Viskotester VT 24 bei 5,66 Umdrehungen/min gemessen.
> > erstellung vernetzter Polycarbonsäuren

Die im folgenden angegebenen Teile sind Gew.-Teile. Die K-Werte wurden nach H. Fikentscher, Cellulose-Chemie 32, Seiten 58 bis 64 und 71 bis 74 (1932) bestimmt; dabei bedeutet $K = k. 10^3$.

## Verdickungsmittel A

In einem 2-l-Glasreaktor, der mit einem Ankerrührer, Stickstoffeinlaß und -auslaß versehen war, wurden 650 Teile Benzol, 3 Teile wasserfreies Polyvinylpyrrolidon vom K-Wert 30, 3 Teile Divinyldioxan und 300 Teile wasserfreie Acrylsäure vorgelegt und bei einer Rührerdrehzahl von 200 Upm im schwachen $N_2$-Strom auf eine Temperatur von 70°C erhitzt. Dann fügte man ein Teil einer Lösung von 0,3 Teilen Azodiisobuttersäurenitril gelöst in 50 Teilen wasserfreiem Benzol zu. Nach 1/4 Stunde war eine Trübung zu erkennen. Innerhalb von 3 Stunden setzte man dann den Rest der Azodiisobuttersäurenitrillösung zu. Danach erhitzte man die Mischung noch eine Stunde auf 70°C. Nach dem Abkühlen wurde die Polymerisatsuspension dann in einem Rotationsverdampfer bei 50°C und ca. 35 mbar bis zur Trockne eingeengt.

## Verdickungsmittel B

In einem 2-l-Glasreaktor, der mit einem Ankerrührer, Siedekühler, Stickstoffeinlaß und -auslaß versehen war, wurden 697 Teile 1,1,1-Trichlorethan, 250 Teile wasserfreie Acrylsäure und 1,5 Teile Pentaerythrittriallylether vorgelegt und bei einer Rührerdrehzahl von 200 Upm im schwachen $N_2$-Strom auf eine Temperatur von 65°C erhitzt. Dann fügte man 1 Teil einer Lösung von 0,25 Teilen Acetylcyclohexansulfonylperoxid in 50 Teilen 1,1,1-Trichlorethan zu. Nach 1/4 Std., nachdem der Ansatz trüb geworden war, wurde der Rest der Initiatorlösung innerhalb von 5 Std. gleichmäßig zudosiert. Anschließend wurde das Reaktionsgemisch noch 1 Std. nacherhitzt bei ca. 74°C (Sieden). Während der Polymerisation wurde mit 500 Teilen 1,1,1-Trichlorethan verdünnt, um den Ansatz rührbar zu halten. Nach dem Abkühlen trocknete man einen Teil der Polymerisatsuspension in einem Schaufeltrockner bei 50°C und 40 mbar bis zur Trockne, während ein anderer Teil der Polymerisatsuspension erfindungsgemäß getempert wurde (vgl. Beispiel 3).

## Beispiel 1

Jeweils 20 Teile des Verdickungsmittels A werden in einem Rotationsverdampfer im schwachen Stickstoffatom bei 80°C verschiedene Zeiten erhitzt und dann die Verdickerwirkung bestimmt. Das Beispiel 1a ist das Vergleichsbeispiel ohne Nachtempern.

| Beispiel 1 | Temperzeit [Std.] | Viskosität des Verdickungsansatzes [Pa.s] |
|---|---|---|
| a (Vergleich) | – | 4,9 |
| b | 2 | 6,7 |
| c | 5 | 7,6 |

Der Viskositätsanstieg nach 5 Std. bei 80°C geht auf 155 % des Ausgangswertes.

**Beispiel 2**

20 Teile des Verdickungsmittels A werden in 80 Teilen n-Oktan suspendiert und verschiedene Zeiten bei 125° C (Sieden) erhitzt. Nach Eindampfen des Lösungsmittels im Rotationsverdampfer bei 50°C und 50 mbar wird die Verdickerwirkung des Trockenprodukts nach der oben gegebenen Vorschrift bestimmt.

| Beispiel 2 | Temperzeit [Min.] | Viskosität des Ver- dickungsansatzes [Pa.s] |
|---|---|---|
| a (Vergleich) | – | 4,8 |
| b | 2 | 5,3 |
| c | 6 | 7,7 |
| d | 20 | 5,6 |

Der Viskositätsanstieg nach 6 Min. bei 125° beträgt gegenüber dem Vergleich (Beispiel a) 160 %.

**Beispiel 3**

Verdickungsmittel B wird nach der Polymerisation auf 100° C unter Druck erhitzt. Nach verschiedenen Zeiten werden Proben entnommen. Nach dem Trocknen der Proben bei 50° C im Vakuumtrockenschrank wird von den Pulvern jeweils die Verdickerwirkung bestimmt.

| Beispiel 3 | Temperzeit [Std.] | Viskosität des Ver- dickungsansatzes [Pa.s] |
|---|---|---|
| a (Vergleich) | 0 | 5,5 |
| b | 0,5 | 8,0 |
| c | 1 | 6,8 |
| d | 2 | 6,2 |

Der Viskositätsanstieg nach 0,5 Std. bei 100° steigt auf 145 % des Ausgangswertes (Vers. a).

**Beispiel 4**

20 Teile des pulverförmigen Verdickungsmittels B werden in 80 Teilen n-Oktan suspendiert und unter verschiedenen Bedingungen, die in der folgenden Tabelle angegeben sind, getempert. Anschließend werden die Suspensionen im Vakuumtrockenschrank bei 50°C getrocknet. Danach wurde jeweils die Verdickerwirkung der Pulver bestimmt.

| Beispiel 4 | Temperung Temperatur [°C] | Zeit [Std.] | Viskosität des Verdickungsansatzes [Pa.s] |
|---|---|---|---|
| a (Vergleich) | – | – | 4,9 |
| b (Vergleich) | 20 | 24 | 4,8 |
| c | 80 | 0,5 | 6,7 |
| d | 80 | 1 | 7,0 |
| e | 80 | 2 | 7,2 |
| f | 80 | 4 | 7,5 |
| g | 100 | 0,25 | 7,0 |
| h | 100 | 0,5 | 7,8 |
| i | 100 | 1 | 7,6 |
| j | 100 | 2 | 7,0 |

Bei 80° wird in dieser Versuchsreihe die höchste Verdickerwirkung nach 4 Std. und bei 100°C nach 0,5 Std. erreicht.

**Patentansprüche**

1. Verfahren zur Erhöhung der Wirksamkeit von hochmolekularen vernetzten Polycarbonsäuren, die als Verdickungsmittel für neutrale und alkalisch wäßrige System verwendet und durch Fällungs- oder Suspensionspolymerisation von Mischungen aus
 (a) 70 bis 99,9 Gew.-% monoethylenisch ungesättigten Carbonsäuren,
 (b) 0,1 bis 10 Gew.-% 2- oder mehrfach ethylenisch ungesättigten Monomeren und
 (c) 0 bis 20 Gew.-% anderen monoethylenisch ungesättigten Monomeren
 bei Temperaturen bis zu 75°C hergestellt werden, dadurch gekennzeichnet, daß die Copolymerisate nach der Polymerisation 2 Minuten bis 5 Stunden auf eine Temperatur in dem Bereich von 80 bis 130°C erhitzt werden.
2. Verfahren nach Anspruch 1, dadurch gekennzeichnet, daß die Copolymerisate in Form einer Suspension in einem Lösungsmittel, in dem die Polymerisate unlöslich sind, erhitzt werden.
3. Verfahren nach Anspruch 1, dadurch gekennzeichnet, daß getrocknete, pulverförmige Polymerisate erhitzt werden.
4. Verfahren nach den Ansprüchen 1 bis 3, dadurch gekennzeichnet, daß vernetzte Copolymerisate der Acrylsäure oder Methacrylsäure eingesetzt werden.

**Claims**

1. A process for increasing the efficiency of a high molecular weight crosslinked polycarboxylic acid which is used as a thickener for neutral and alkaline aqueous systems and is obtained by precipitation polymerization or suspension polymerization of a mixture of
 (a) from 70 to 99.9% by weight of monoethylenically unsaturated carboxylic acids,
 (b) from 0.1 to 10% by weight of ethylenically diunsaturated or polyunsaturated monomers, and
 (c) from 0 to 20% by weight of other mono-ethylenically unsaturated monomers
 at up to 75°C, wherein the copolymer is heated for from 2 minutes to 5 hours at from 80 to 130°C after the polymerization.
2. A process as claimed in claim 1, wherein the copolymer is heated in the form of a suspension in a solvent in which the polymer is insoluble.
3. A process as claimed in claim 1, wherein the dry pulverulent polymer is heated.
4. A process as claimed in claims 1 to 3, wherein a crosslinked copolymer of acrylic acid or methacrylic acid is used.

**0 117 410**

**Revendications**

1. Procédé pour accroître l'efficacité d'acides polycarboxyliques réticulés de poids moléculaire élevé qui sont utilisés comme épaississant pour des systèmes aqueux neutres et alcalins et qui sont préparés par polymérisation avec précipitation ou en suspension de mélanges de
(a) 70 à 99,9 % en poids d'acides carboxyliques à insaturation mono-éthylénique,
(b) 0,1 à 10 % en poids de monomères à 2 ou plusieurs insaturations éthyléniques et
(c) 0 à 20 % en poids d'autres monomères à insaturation mono-éthylénigue,
à des températures allant jusqu'à 75°C, caractérisé en ce qu'à la suite de la polymérisation, les copolymères sont chauffés pendant 2 mn à 5 h à une température comprise dans la gamme de 80 à 130°C.

2. Procédé selon la revendication 1, caractérisé en ce que les copolymères sont chauffés sous forme d'une suspension dans un solvant, dans lequel les polymères sont insolubles.

3. Procédé selon la revendication 1, caractérisé en ce que des polymères en poudre séchés sont chauffés.

4. Procédé selon l'une quelconque des revendications 1 à 3, caractérisé en ce que des copolymères réticules de l'acide acrylique ou de l'acide méthacrylique sont utilisés.

7